# EUROPEAN PATENT APPLICATION

(11) **EP 2 378 260 A2**
(43) Date of publication of application: **19.10.2011**
(21) Application number: 10186336.3
(22) Date of filing: 02.10.2010
(51) Int. Cl.: G01K 3/00, G01K 11/06

(54) **Electronic Soil Frostmeter**

(30) Priority: 13.04.2010 CZ 20100286
(71) Applicant: Výzkumný ústav vodohospodárský T.G. Masaryka v.v.i., 16062 Praha 6 (CZ)
(72) Inventor: Bagal, Zdenek, 27801, Kralupy nad Vltavou (CZ); Danes, Libor, 25263, Roztoky u Prahy (CZ)
(74) Representative: Novotny, Jaroslav

(57) **Abstract**

The electronic soil frostmeter is defined as by its design of a minimum two concentric double coated plates (1) and (2) printed circuits, where the metering electrodes are established (3) by etching, when on the board (1) electrodes (3) are interconnected by means of a labyrinth (6) so as the transfer of heat via the conduct between electrodes (3) is limited to the maximum extend, while the center is connected to the terminal, and to ensure the transfer of heat from one side of the printed board to the other electrodes (3) are coated, while on the other board (2) individual electrodes (3) are connected to the terminal, while there is the moisture absorbent insert (4) fitted between boards (1) and (2), which is saturated by water, while the entire set is sealed in plastic foil, when the power supply (7) of the device is provided by the generator (G), fitted with the stabilizer of the output AC voltage, actuated (9) from the metering module (MM).

## Description

### TECHNICAL FIELDS

The invention relates to a probe for soil frost measuring.

### BACKGROUND ARTS

Soil icing is currently measured:
- Using thermometers buried in various depths in the soil. This solution is disadvantageous, since it indicates the temperature and not the freeze out of soil.
- mechanical frostmeter, which is composed of a rubber hose filled with a rubber foam strip and distilled water. The hose is marked with a scale incremented each 1 cm and labeled each 5 cm. It is to be inserted into a plastic tube, which is permanently sinked in the ground. The depth of frozen soil is established by touching. Unfrozen frostmeter is soft when palpated. Upon freezing the presence of ice crystals can be detected by palpation.
- in electric manner
   a) based on difference in specific electrical resistance between frozen and unfrozen soil. Unfrozen soil's specific resistance is two and half levels lower that resistance of frozen soil. The depth of freezing is established by measuring the electric resistance along the probe from the surface down and location th e position, where the resistance is changed from the high value to the low one. Frostmeter is designed as a plastic rod with conductor ring placed around it in regular intervals. It is important to ensure that rings are in contact with the surrounding soil. Electrical resistance is measured between individual rings.
   b) another variant is to fit electrodes into separate independent cells filled with liquid
      - chemical way
      - this solution utilizes temperature induced changes in color of particular solutions. This device utilizes a solution of methylene blue, which changes color from yellow-green to gray with decreasing temperature. The depth of freezing is then determined from the position of the color transition in the device.

In practice, the mechanical principle is the most applied for its reliability, however, on line data transfer is not possible. Devices based on electrical principle are usually very complicated.

### DISLOSURE OF INVENTION

Said deficiencies are resolved in the design of the soil frostmeter in line with this technical solution, which is composed of minimum two double plated printed circuit boards, where measuring electrodes are etched. On one board electrodes are interconnected by means of a labyrith so as the transfer of heat by conduction between electrodes was minimized. The center is wired to the terminal. In order to ensure the transfer of heat from one side of the printed board to another, electrodes are coated. On the other board individual electrodes are wired to terminals. There is a moisture-absorbent insert fitted between the boards, saturated with water. The entire set is sealed in a plastic wrap. The device is supplied by means of an AC generator. AC generator is fitted with the output AC voltage stabilizer.

### BRIEF DESCRIPTION OF DRAWINGS

This invention is detailed by means of a drawing, which contains schematics of the design and wiring of the device.

### MADE FOR CARRING OUT THE INVENTION

Soil frostmeter probe is composed of minimum two printed boards 1 and 2, which contain coated electrodes 3, with a moisture absorbent insert fitted in between 4. Connection of individual electrodes is provided by conductive routes 6 and 8 on the printed board and connected to the terminal. Moisture absorbent insert 4 is saturated with water. Openings 5, which are in the printed circuit of boards 1 and 2, establish the water reservoir. The entire set is sealed in plastic foil. The set is supplied from the AC generator G fitted with the stabilizer of the AC output voltage. The generator G is actuated from the metering module MM by connection to 9. Generator is supplied from the battery. Frost evaluation and data backup is carried out by the MM metering module. Data recorded by the metering module may be subsequently displayed on PC.

### THE APPLICABILITY OF THE INVENTION

Soil frostmeter under this technical solution may be used in industry where the depth of soil freeze needs to be established. It is a simple solution, enabling both on line data transfer and one-off determination of the soil freeze depth. Application of these devices is of a particular importance namely in forestry and agriculture.

Device operation is based on the principle of measuring the conductivity of ice and water. The invention involves creating of the metering electrodes 3 on the printed circuit board 1 and 2. On the board 1 the metering surfaces are interconnected. This interconnection creates the labyrinth 6, limiting temperature influencing of metering surfaces. This board 1 serves as a common metering point. Metering surfaces of the other board 2 are individually connected to the metering module MM. Between boards 1 and 2, there is the moisture absorbent insert 4 fitted, saturated with water. The entire set is sealed in a waterproof container of small thickness. For metering AC voltage generated by the generator G is used in order to avoid dissociation of water. The metering module MM controls the generator G , which is fitted with a stabilizer of the output AC voltage and data measured are stored for the subsequent processing in PC.

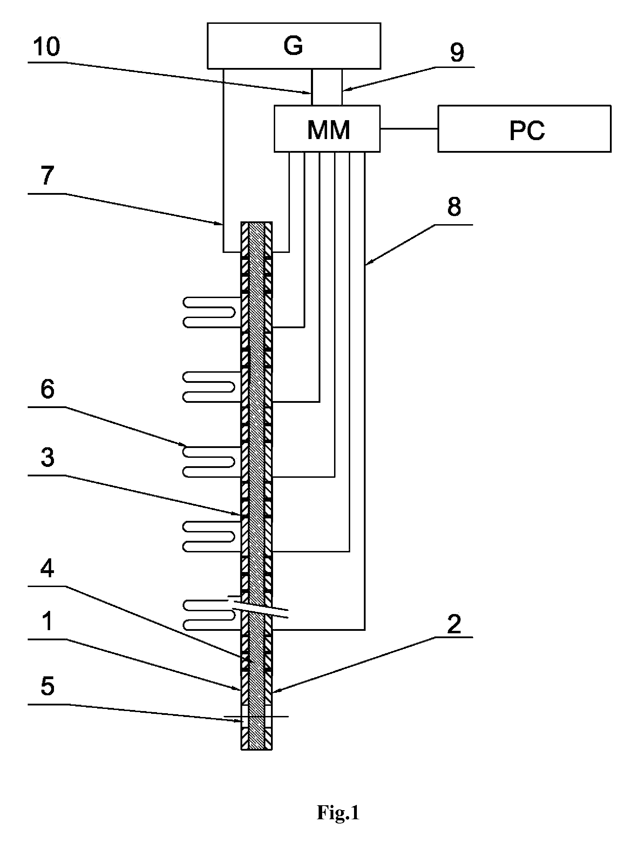

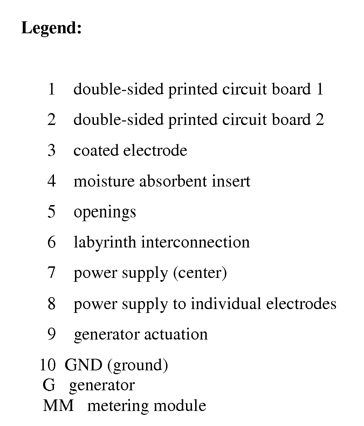

## Claims

1. The electronic soil frostmeter is **characterized by** its design of a minimum two concentric double coated plates (1) and (2) printed circuits, where the metering electrodes are established (3) by etching, when on the board (1) electrodes (3) are interconnected by means of a labyrinth (6) so as the transfer of heat via the conduct between electrodes (3) is limited to the maximum extend, while the center is connected to the terminal, and to ensure the transfer of heat from one side of the printed board to the other electrodes (3) are coated, while on the other board (2) individual electrodes (3) are connected to the terminal, while there is the moisture absorbent insert (4) fitted between boards (1) and (2), which is saturated by water, while the entire set is sealed in plastic foil, when the power supply (7) of the device is provided by the generator (G), fitted with the stabilizer of the output AC voltage, actuated (9) from the metering module (MM).
